# EUROPÄISCHE PATENTSCHRIFT

(11) **EP 0 522 520 B1**
(45) Veröffentlichungstag und Bekanntmachung des Hinweises auf die Patenterteilung: **04.09.1996**
(21) Anmeldenummer: 92111554.9
(22) Anmeldetag: 08.07.1992
(51) Int. Cl.: G01S 17/88, G01S 17/87

(54) **Abstandsmesseinrichtung für Kraftfahrzeuge**
Distance measuring apparatus for vehicules
Appareil pour mesure de distances pour véhicules

(30) Priorität: 12.07.1991 DE 4123056
(43) Veröffentlichungstag der Anmeldung: 13.01.1993
(73) Patentinhaber: Bayerische Motoren Werke Aktiengesellschaft, 80788 München (DE)
(72) Erfinder: Jost, Michael, W-8044 Unterschleissheim (DE); Weishaupt, Walter, W-8000 München 60 (DE)

(56) Entgegenhaltungen:
- DE-A- 2 455 733
- DE-C- 4 005 919
- US-A- 3 150 370

## Beschreibung

Die Erfindung bezieht sich auf eine Abstandsmeßvorrichtung nach dem Oberbegriff des Patentanspruchs 1. Derartige Abstandsmeßeinrichtungen arbeiten i.d.R. nach dem Laufzeitverfahren und besitzen Meßstrahlen auf z.B. Laser- oder Radarbasis und/oder andere Formen von akustischen oder elektromagnetischen Wellen.

Eine derartige Einrichtung ist aus der DE 40 05 919 C1 bekannt. Jede Sender-/Empfängereinheit (im folgenden SEE genannt) stellt einen eigenen Entfernungsmesser dar, der die zugehörige Meßstrecke in äquidistanten Schritten abmißt. Die zugehörigen Teil-Meßstrecken sind für die beiden SEE's identisch. Daraus ergibt sich ein Auflösungsvermögen der bekannten Einrichtung, die gleich der Schrittweite ist.

Ferner ist aus der US-A-3 150 370 bekannt, mit Hilfe von entfernt voneinander angeordneten Radarstationen ein Objekt zu verfolgen. Dabei soll das Objekt mit einer Folge von Radarimpulsen getroffen werden, die gegenseitig einen zeitlichen Versatz besitzen. Dieser Versatz der von den einzelnen Radarstationen ausgesandten Impuls folgen hängt dabei vom Abstand des Objekts ab und variiert mit diesem. Damit werden unerwünschte Effekte in Form eines "gate stealing" und einer "echo-transmission-interference" vermieden. Erst damit wird es möglich, den reflektierten Impuls wahrzunehmen und eine Information über ein Objekt zu erfassen.

Der Erfindung liegt die Aufgabe zugrunde, eine Abstandsmeßeinrichtung der Eingangs genannten Art zu schaffen, bei der mit einfachen Mitteln das Auflösungsvermögen deutlich erhöht ist.

Die Erfindung löst diese Aufgabe mit den kennzeichnenden Merkmalen des Patenanspruchs 1.

Durch den gegenseitigen Versatz der beiden Maßstäbe wird auf einfache Weise eine deutliche Erhöhung des Auflösungsvermögens erreicht. Ist dieser Versatz beispielsweise, wie im Patentanspruch 2 angegeben, gleich der halben Schrittweite, so ergibt sich daraus ein Auflösungsvermögen, das gegenüber der bekannten Einrichtung verdoppelt ist.

Alternativ dazu ist es gemäß Patentanspruch 3 möglich, die Maßstäbe variabel gegeneinander zu versetzen. Es ist beispielsweise möglich, einen Maßstab vorzugeben und den anderen Maßstab zeitlich oder aber abhängig von der Existenz eines Hindernisses abwechselnd um ein Maß zu versetzen, das gleich 1/3 bzw. 2/3 des Maßstabs ist. Gegenüber der bekannten Einrichtung ergibt sich damit eine Verdreifachung des Auflösungsvermögens.

Neben der eingangs genannten, auf die erfindungsgemäße Einrichtung abzielenden Aufgabe ist es eine weitere Aufgabe der vorliegenden Erfindung, d.h. die Verwendung dieser Vorrichtung um eine aussagekräftige Bestimmung des Abstands eines Hindernisses vorzunehmen. Hierzu werden die Merkmale angewandt, die in Patentanspruch 4 angegeben sind. Aus der Änderung des reflektierten Signals, das durch eine Relativbewegung zwischen dem Hindernis und dem die SEE tragenden Kraftfahrzeug besteht, läßt sich mit Hilfe eines geeigneten Rechners ohne weiteres die Bewegungstendenz des Hindernisses im Bezug auf das Kraftfahrzeug ablesen.

Insbesondere im Nahbereich, d.h. bei geringem Abstand eines Hindernisses vom Kraftfahrzeug kann der vorgegebene Maßstab auch dann, wenn er in der erfindungsgemäßen Weise verkleinert ist, nicht ausreichen bzw. kann das Ausgangssignal der Einrichtung nicht deutlich genug auf eine Gefahrentendenz hinweisen. Darunter ist insbesondere eine Annäherung eines Hindernisses an das Kraftfahrzeug im Nahbereich zu verstehen, die mit Hilfe der erfindungsgemäßen Einrichtung möglicherweise zu spät bzw. für den Fahrer nicht eindringlich genug bemerkt wird. Hierzu bietet sich eine Verbesserung der Erfindung an, die im Patentanspruch 4 angegeben ist. Werden ergänzend die Ausgangssignale eines fahrzeuginternen in der Regel ohnehin vorhandenen Weggebers mit wesentlich kleinerem Maßstab eingesetzt, so lassen sich der Abstand und die Bewegungstendenz des Hindernisses wesentlich besser detektieren und auch rechtzeitig eine Warnung für den Fahrzeugbenutzer daraus ableiten. Ein derartiger Weggeber dient beispielsweise zur Geschwindigkeits-bzw. Wegstreckenanzeige.

In der Zeichnung ist ein Ausführungsbeispiel der Erfindung dargestellt. Es zeigt
- Fig.1: in den Teilen a und b eine Draufsicht bzw. Seitenansicht einer Abstandsmeßeinrichtung für Kraftfahrzeuge gemäß der Erfindung ,
- Fig.2: ein Diagramm zur Erläuterung der Wirkungsweise der Einrichtung von Fig.1 und
- Fig. 3: eine Schaltanordnung zur Verdeutlichung des Aufbaus und der Arbeitsweise der Einrichtung nach Fig.1.

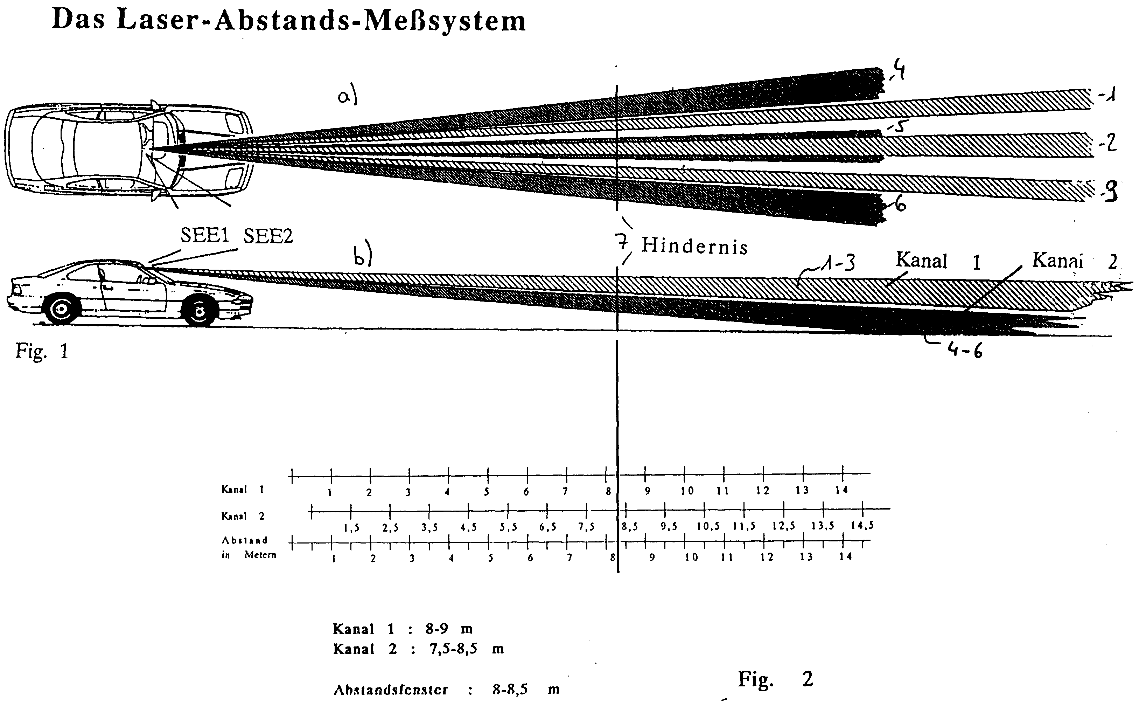

Die in Fig.1 in der Draufsicht bzw. Seitenansicht gezeigte mittels Laserstrahlen arbeitende Abstandsmeßeinrichtung enthält zwei Sender-Empfänger-Einheiten SEE 1 und SEE 2, die jeweils ein Tripel von Laserstrahlen 1 bis 3 bzw. 4 bis 6 aussenden. Die Laserstrahlen 1 bis 3 der SEE 1 sind auf einen Untersuchungsbereich gerichtet, der in wesentlich größerer Entfernung als der Untersuchungsbereich beginnt bzw. endet, der durch die Laserstrahlen 4 bis 6 abgedeckt ist. Die SEE 1 und SEE 2 tasten die Meßstrecke, die bis zum Ende des Untersuchungsbereichs reicht, in äquidistanten Schritten von einem Meter ab.

Wesentlich ist dabei, daß der Maßstab für die durch die SEE 1 bzw. SEE 2 untersuchten Meßstrecken gegeneinander versetzt sind. Bei Ausführungsbeispiel gemäß der Fig.2 ist der Versatz gerade gleich einer halben Einheit, d.h. 0,5 Meter gewählt. In dem durch die Strahlen 1 bis 3 bestimmten Kanal 1 für die SEE 1 werden Hindernisse erkannt, die im Abstand von geradzahligen Vielfachen des Maßstabs, d.h. im Abstand von 1,2,3,4,5,6,....Meter liegen. Für den Kanal 2, gebildet durch die Strahlen 4 bis 6 der SEE 2 werden Hindernisse erkannt, wenn sie im Abstand von 0,5, 1,5, 2,5,;3,5,...Metern liegen.

Als Beispiel sei ein Hindernis 7 angenommen, das in einer Entfernung von etwa 8,3 Metern liegt. Mit Hilfe des Kanals 1 wird erkannt, daß die Entfernung des Hindernisses zwischen 8 und 9 Metern liegt. Der Kanal 2 läßt eine Aussage zu, wonach das Hindernis zwischen 7,5 und 8,5 Metern liegt. Aus dem Vergleich der beiden Kanäle 1 und 2 ergibt sich, daß das Hindernis zwischen 8 und 8,5 Metern liegen muß. Wären die beiden Kanäle 1 und 2 identisch, so ließe sich lediglich die Aussage ableiten, daß das Hindernis zwischen 8 und 9 Metern liegt.

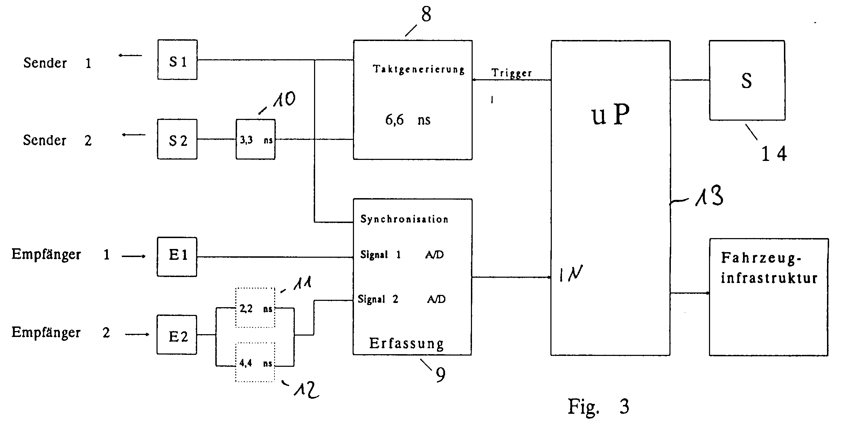

Die Verschiebung der beiden Maßstäbe zueinander wird mit Hilfe einer Schaltanordnung erreicht, die in Fig. 3 schematisch dargestellt ist. Für die Einheit SEE 1 sind der Sender als S1 und der Empfänger als E1 und entsprechend für die SEE 2 der Sender als S2 und der Empfänger als E2 bezeichnet. Die beiden Sender werden durch Taktgenerator 8 mit einer Taktzeit von 6,6 ns betrieben. Diese Taktzeit entspricht einem Maßstab von einem Meter für die mit den Empfängern E1 und E2 aufgenommenen Signale. Zwischen dem Taktgenerator 8 und dem Sender S2 ist ein Laufzeitglied mit einer Laufzeit von 3,3 ns eingeschaltet. Diese Laufzeit entspricht einer Wegstrecke von 0,5 Metern. Daraus ergibt sich eine Verschiebung der mit den beiden Empfängern E1 und E2 aufgenommenen, auf jeweils einen Entfernungsabschnitt von einem Meter ausgerichteten reflektierten Signale um eine Länge, die gleich 0,5 Meter ist. Diese reflektierten Signale werden mit einer Erfassungseinrichtung 9 aufgenommen und in bekannter Weise auf die Existenz eines Hindernisses untersucht. Die Erfassungseinrichtung 9 ist mit dem Taktgenerator 8 synchronisiert. Damit wird es möglich, wie in Fig.2 dargestellt, Hindernisse wie das Hindernis 7 auf einen halben Meter genau zu erkennen.

In Fig.3 ist eine Möglichkeit dargestellt, die von den beiden Einheiten SEE 1 und SEE 2 vorgegebenen Maßstäbe variabel gegeneinander zu versetzen. Dies erfolgt mit Hilfe zweier verschiedener Laufzeitglieder mit Eigenzeit von 2,2 ns bzw. 4,4 ns, die dem Empfänger E2 nachgeschaltet sind. Dabei kann das Laufzeitglied 10 weggelassen werden. Da 2,2 ns bzw. 4,4 ns eine Strecke von 1/3 bzw. 2/3 Metern entspricht, ergibt sich bei abwechselnder Einschaltung der Laufzeitglieder 11 und 12 eine variable Verschiebung der beiden Maßstäbe um 1/3 bzw. 2/3 m. Damit ist es möglich, mit Hilfe eines nachgeschalteten Mikroprozessors 13 die Bewegungstendenz des Hindernisses zu erkennen.

Ergänzend kann mit Hilfe eines in der Regel fahrzeugintern vorhandenen Wegstreckenzählers mit einem Maßstab, der wesentlich kleiner als der der SEE 1 bzw. SEE 2 ist, zusätzlich und insbesondere im Nahbereich die drohende Gefahr einer Kollision mit einem Hindernis erkannt werden. Angenommen, der Mikrocomputer liefert aus den Eingangssignalen, die mit den Empfängern E1 und E2 aufgenommen werden, die Aussage, daß sich das Hindernis in einem Abstand zwischen 1 und 1,5 Meter befindet (Verwendung des Laufzeitglieds 10 ohne Laufzeitglieder 11 und 12). Liefert nunmehr der Wegstreckengeber 14 die Aussage, daß sich das eigene Kraftfahrzeug weiter bewegt, so kann daraus die zunehmende Gefahr abgeleitet werden, daß das Hindernis die Entfernung von einem Meter sogar noch unterschreitet. Dieser Fall tritt dann auf, wenn sich das Kraftfahrzeug tatsächlich dem Hindernis nähert. Umgekehrt kann beispielsweise dann, wenn der Wegstreckengeber 14 signalisiert, daß das eigene Kraftfahrzeug steht, aus einer sich vergrößernden Entfernung zwischen dem Kraftfahrzeug und dem Hindernis eine Verringerung der Kollisionsgefahr abgeleitet werden. Dieser Fall tritt beispielsweise dann auf, wenn die SEE 1 und SEE 2 den Schluß zulassen, daß das Hindernis zunächst beispielsweise zwischen 1 und 1,5 Meter, dann mehr als 1,5 Meter und anschließend mehr als 2 Meter vom Kraftfahrzeug entfernt ist. Auf diese Weise kann die Bewegungstendenz des Kraftfahrzeugs erkannt und gegebenenfalls erforderliche Notmaßnahmen bzw. Warnungen ausgelöst werden. Entsprechend können diese Maßnahmen eingestellt werden, wenn die Kollisionsgefahr abnimmt bzw. beseitigt ist.

## Patentansprüche

1. Abstandsmeßeinrichtung für Kraftfahrzeuge, mit im Kraftfahrzeug angeordnet zwei Sender-/Empfängereinheiten (SEE1, SEE2) für jeweils ein Meßstrahlen-Bündel (1-3, 4-6) dadurch gekennzeichnet, daß die Meßstrahlen-Bündel (1-3, 4-6) unterschiedliche Elevation besitzen und auf zwei in unterschiedlichen Entfernungen beginnende Untersuchungsbereiche ausgerichtet sind, daß die Sender-/Empfängereinheiten die Entfernung bis zu und in ihrem Untersuchungsbereich mit konstantem Maßstab abtasten, daß die Maßstäbe der beiden Sender-/Empfängereinheiten (SEE1, SEE2) untereinander gleich und daß die Maßstäbe der beiden Sender-/Empfängereinheiten (SEE1, SEE2) um ein definiertes Maß gegeneinander versetzt sind.

2. Abstandsmeßeinrichtung nach Anspruch 1, dadurch gekennzeichnet, daß die Maßstäbe der beiden Sender-Empfängereinheiten um eine halbe Einheit gegeneinander versetzt sind.

3. Abstandsmeßeinrichtung nach Anspruch 1, dadurch gekennzeichnet, daß die Maßstäbe der beiden Sender Empfängereinheiten um ein variables Maß gegeneinander versetzt sind.

4. Verwendung einer Abstandsmeßeinrichtung nach einem der Ansprüche 1 bis 3, dadurch gekennzeichnet, daß in einer der Sender-/Empfängereinheiten (SEE1, SEE2) nachgeschalteten Recheneinheiten (13) durch abwechselnder Einschaltung einer Laufzeitverzögerung die Bewegungstendenz eines Hindernisses bestimmt wird.

## Claims

1. A distance-measuring device for motor vehicles comprising two transmitter-receiver units (SEE1, SEE2) disposed in the vehicle and each transmitting or receiving a respective bunch of measuring beams (1 - 3, 4 - 6), characterised in that the beams (1 - 3, 4 - 6) have different elevations and are directed towards two investigation regions beginning at different distances, the transmitter-receiver units scan the distance up to and in their investigation region using a constant scale, the scales of the two transmitter-receiver units (SEE 1, SEE2) are the same and the scales of the two transmitter-receiver units (SEE1, SEE2) are offset from one another by a defined amount.

2. A distance-measuring device according to claim 1, characterised in that the scales of the two transmitter-receiver units are offset from one another by half a unit.

3. A distance-measuring device according to claim 1, characterised in that the scales of the two receiver-transmitter units are offset from one another by a variable amount.

4. Use of a distance-measuring device according to any of claims 1 to 3, characterised in that the motion of an obstacle is determined by alternately switching on a transit-time delay in one of the computer units (13) downstream of the transmitter-receiver units (SEE1, SEE2).

## Revendications

1. Installation de mesure d'intervalle pour un véhicule automobile comportant, dans le véhicule, deux unités émetteur/récepteur (SEE 1, SEE 2) utilisant chacune un faisceau de rayons de mesure (1-3, 4-6), caractérisée en ce que les faisceaux de rayons de mesure (1-3, 4-6) ont une élévation différente et sont dirigés sur deux zones d'analyse commençant à des éloignements différents, les unités émetteur/récepteur détectant jusqu'à leur zone d'analyse et dans celle-ci, avec une échelle constante, les échelles des deux unités émetteur/récepteur (SEE 1, SEE 2) étant égales et les échelles des deux unités d'émetteur-récepteur (SEE 1, SEE 2) étant décalées l'une par rapport à l'autre d'une quantité définie.

2. Installation de mesure d'intervalle selon la revendication 1, caractérisée en ce que les échelles des deux unités d'émetteur-récepteur sont décalées d'une demi-unité de mesure.

3. Installation de mesure d'intervalle selon la revendication 1, caractérisée en ce que les échelles des deux unités d'émetteur-récepteur sont décalées d'une quantité variable.

4. Application d'une installation de mesure d'intervalle selon l'une des revendications 1 à 3, caractérisée en ce que les unités de calcul (13) en aval de l'une des unités émetteur/récepteur (SEE 1, SEE 2) sont définies par la mise en oeuvre alternée d'une temporisation de temps de parcours pour déterminer la tendance du déplacement d'un obstacle.
